# EUROPEAN PATENT SPECIFICATION

(11) **EP 0 479 196 B1**
(45) Date of publication and mention of the grant of the patent: **29.11.1995**
(21) Application number: 91116677.5
(22) Date of filing: 30.09.1991
(51) Int. Cl.: H05B 41/29

(54) **Power supply circuit**
Stromversorgungskreis
Circuit d'alimentation en courant

(30) Priority: 30.09.1990 JP 261834/90
(43) Date of publication of application: 08.04.1992
(73) Proprietor: TOSHIBA LIGHTING & TECHNOLOGY CORPORATION, Minato-ku, Tokyo-To (JP)
(72) Inventor: Shimizu, Keiichi, Kanazawa-ku, Yokohama-shi (JP); Uratani, Kazuyuki, Sumida-ku, Tokyo (JP)
(74) Representative: Henkel, Feiler, Hänzel & Partner

(56) References cited:
- EP-A- 0 313 134

## Description

This invention relates to a power supply circuit to be used for a starter device of a discharge lamp and, more particularly, it relates to a power supply circuit which is a composite-type power conversion circuit comprising a chopper circuit and an inverter circuit.

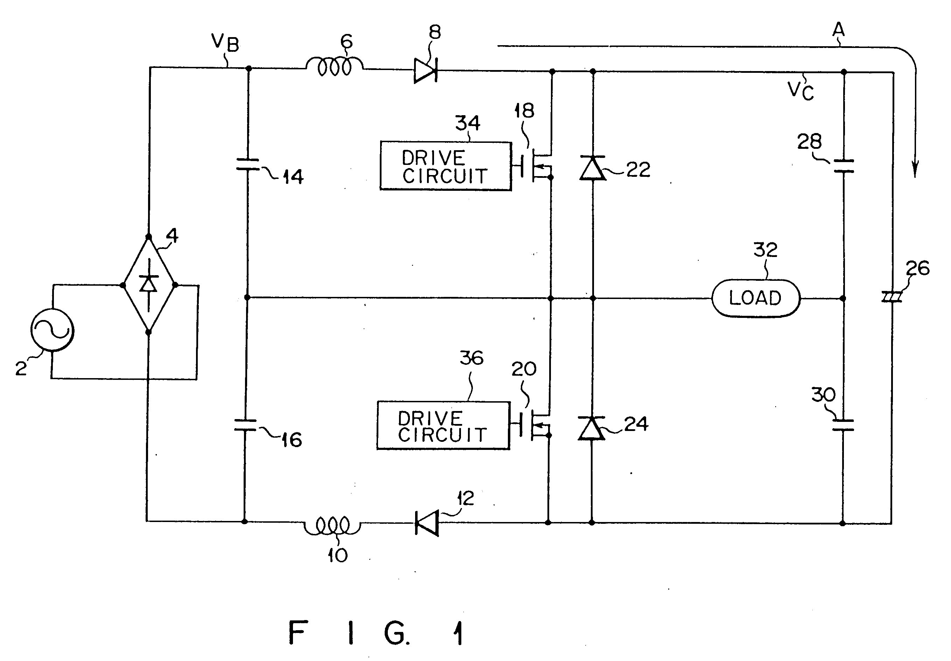

There has been known a composite power supply circuit that operates both as a chopper for raising the voltage of a DC and an inverter for converting the DC into a high frequency AC before supplying the load with power. Fig. 1 of the accompanying drawings shows a circuit diagram of such a power supply circuit.

Referring to Fig. 1, an AC from a single phase AC power source (a commercial AC power supply) 2 is rectified by a diode bridge 4. A terminal of a series circuit comprising an inductor 6 and a forward facing diode 8 is arranged on the supply side of the circuit and connected to the positive side rectified current output terminal of the diode bridge 4. The negative side rectified current output terminal of said diode bridge 4 is connected to a terminal of another series circuit comprising an inductor 10 and a forward facing diode 12. Still another series circuit comprising capacitors 14 and 16 is connected between the two output terminals of the diode bridge 4.

FETs (Field Effect transistors) 18 an 20 of a couple of switch devices to be alternately turned on and off at a high frequency are serially connected. The cathode of the diode 8 (or the remaining terminal of the series circuit comprising the inductor 6 and diode 8) is connected to the drain of the FET 18 while the anode of the diode 12 (or the remaining terminal of the series circuit comprising the inductor 10 and the diode 12) is connected to the source of the FET 20.

The node of the capacitors 14 and 16 is connected with the node of the FETs 18 and 20, which are connected in parallel with respective backward facing diodes 22 and 24. The combination of the FET 18 and the diode 22 and that of the FET 20 and the diode 24 constitute so many reverse-conducting switch devices. A smoothing capacitor 26 is connected between the drain of the FET 18 and the source of the FET 20.

When a power supply circuit having a configuration as described above is put to use, a load 32, e.g., a discharge lamp provided with an inductor, is connected between the output terminal of the circuit, or the node of the FETs 18 and 20, and the node of capacitors 28, 30, whose remaining terminals are connected to the respective terminals of the smoothing capacitor 26. High frequency AC power is supplied to the discharge lamp 32 to turn it on as the FETs 18 and 20 are alternately turned on and off upon receiving drive control signals from drive circuits 34 and 36.

Therefore, in the power supply circuit, the two sets of FET-diode combination using the FETs 18 and 20 and the diodes 22 and 24 which are connected in parallel with the respective FETs 18 and 20 operate as two voltage-booster choppers as they are alternately activated to transfer the electric charges accumulated in the capacitors 14, 16 which are serially connected between the rectified current output terminals respectively to the inductors 6 and 10 and simultaneously discharge the electric charges stored in the inductors 6 and 10 toward the smoothing capacitor 26, while the combined FETs 18, 20 and smoothing capacitor 26 operate as a half bridge inverter that supplies the load 32 with a high frequency power.

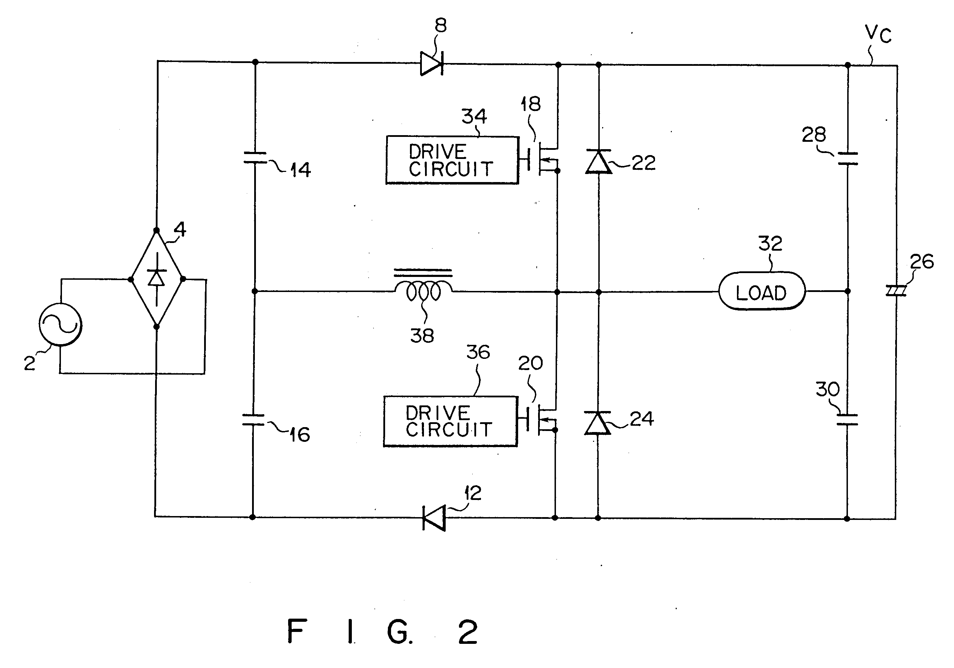

Fig. 2 of the accompanying drawings shows a circuit diagram of another similar power supply circuit. In this circuit, a diode 8 is connected between the positive side rectified current output terminal of a diode bridge 4 and the drain of a FET 18, whereas another diode 12 is connected between the source of another FET 20 and the negative side rectified current output terminal of the diode bridge 4, while an inductor 38 that operates as a chopper is connected between the junction of capacitors 14 and 16 and that of the FETs 18 and 20.

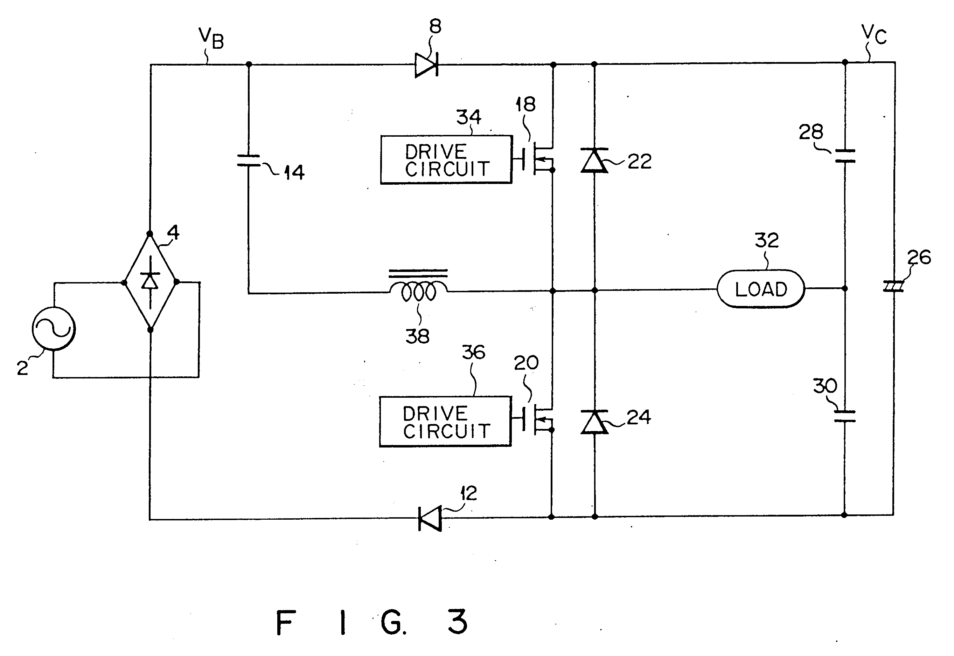

In Fig. 3 that shows a circuit diagram of still another power supply circuit, a capacitor 14 and an inductor 38 that operates as a chopper are connected between the positive side rectified current terminal of a diode bridge 4 and the node of FETs 18 and 20.

In each of these power supply circuits again, the two sets of FET-diode combination using the FETs 18 and 20 and the diodes 22 and 24 which are connected in parallel with the respective FETs 18 and 20 operates as two voltage-booster chippers as the FET 18 and 20 are alternately activated to transfer the electric charges in the capacitors 28, 30 or 14 to the inductor 38 and simultaneously discharge the electric charge stored in the inductor 38 toward a smoothing capacitor 26, while a half bridge inverter comprising the FET 18 and 29 and the smoothing capacitor 26 supplies the load 32 with a high frequency power.

In a known power supply circuit as shown in Fig. 1, it should be noted, there occurs a large electric current that runs through a route indicated by A in the drawing to excessively charge the smoothing capacitor 26 when the voltage V_{B} of the power source has become, though instantaneously, higher than the voltage V_{C} between the two terminals of the smoothing capacitor 26 because of a surge in the power supply line. If either of the FETs 18 and 20 is turned on under this condition, the electric charge accumulated in either of the inductors 6 and 10 can cause an overcurrent that runs through the FET 18 or 20 in question. While the rate of overcurrent may depend on the circumstances where the overcurrent takes place, it can be ten times as high as that of ordinary current and destroy the related FET 18 or 20.

A known power supply circuit as shown in Fig. 1 is also accompanied by a problem of an excessively high DC voltage V_{C} that can appear between the two terminals of the smoothing capacitor 26 as excessive electricity is accumulated in the smoothing capacitor 26 when the load 32 consumes electricity as a relatively low rate.

A known power supply circuit as shown in Figs. 2 and 3 inherently has a problem that the voltage waveform of the incoming current as shown in Fig. 4A is modified to show a rounded current waveform as shown in Fig. 4B before it reaches the load 32. The waveform of Fig. 4B comprises, beside a basic waveform, a tertiary harmonic component as illustrated in Fig. 4C, which leaks out of the AC power supply line and adversely affects the operation of nearby electronic apparatus.

Prior art documents Japanese Patent Application No. 2-21090 and Japanese Patent Application Kokai publication No. 3-226276 disclose circuit arrangements similar to those shown in Figures 1 to 3.

It is an object of the present invention to provide a power supply circuit which is protected against destruction of the switch devices it has even when the power source voltage is instantaneously raised excessively high.

It is another object of the present invention to provide a power supply circuit that can prevent any DC overvoltage from occurring in it when the rate of energy consumption of its load is lowered.

It is still another object of the present invention to provide a power supply circuit that can correct the waveform of the current which is supplied to its load to come close to a sine wave.

To solve these objects the present invention provides a power supply device as specified in claim 1.

This invention can be more fully understood from the following detailed description when taken in conjunction with the accompanying drawings, in which:
Fig. 1 is a circuit diagram of a prior art power supply circuit showing its circuit configuration;
Fig. 2 is a circuit diagram of another prior art power supply circuit showing its circuit configuration;
Fig. 3 is a circuit diagram of still another prior art power supply circuit showing its circuit configuration;

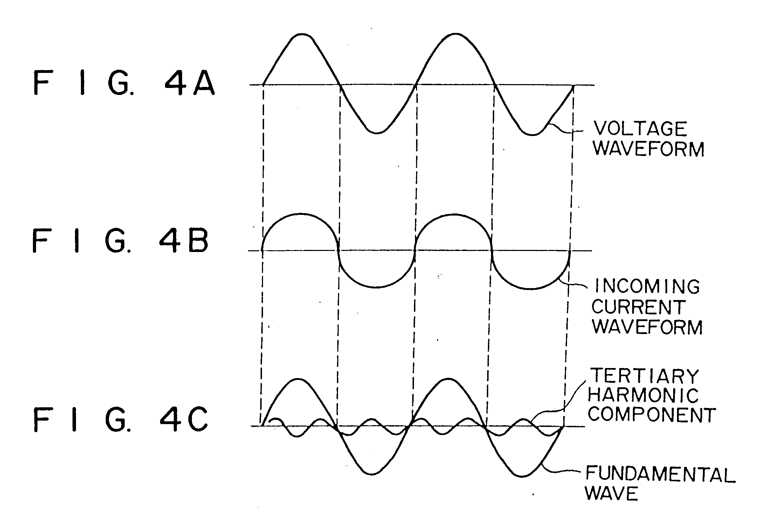

Figs. 4A, 4B and 4C are graphic illustrations showing how the current waveform is modified in any of the prior art power supply circuits; and

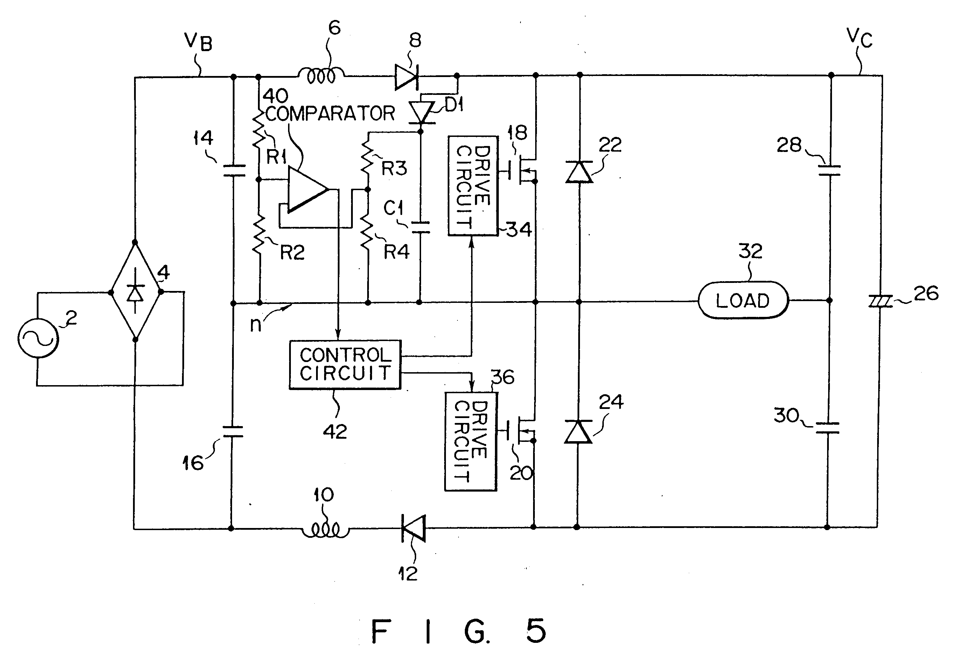

Fig. 5 is a circuit diagram showing an arrangement of an embodiment of a power supply circuit according to the present invention.

The present invention will be described in greater detail by referring to the accompanying drawings that illustrate preferred embodiments of the invention. In the drawings and the related description, circuit components which are similar to those of the prior art power supply circuits described above will be indicated by the same reference numerals and will not be described any further.

Fig. 5 is a circuit diagram of a preferred embodiment of the invention and shows its circuit configuration. In Fig. 5, a voltage divider circuit which is a series circuit constituted by resistors R1 and R2 to detect the input voltage is connected between the positive side rectified current output terminal of a diode bridge 4 and the node of a series circuit constituted by capacitors 14 and 16. A half of the instantaneous input voltage is applied to this voltage divider circuit. The node of the resistors R1 and R2 where the divided voltage is produced is connected with one of the two input terminals of a comparator circuit 40. The series circuit of the capacitors 14 and 16 is arranged between the two rectified current output terminals of the diode bridge 4. The node of the capacitors 14 and 16 is connected by way of a connecting line n to the node of FETs 18 and 29 that constitute so many switching devices.

A series circuit constituted by a capacitor C1 and a diode D1 having its anode connected to a smoothing capacitor 26 is arranged between the positive side terminal of the smoothing capacitor 26 and the connecting line n. One of the two terminals of another voltage divider circuit which is also a series circuit constituted by resistors R3 and R4 is connected with the node of a diode D1 and the capacitor C1, while its other terminal is connected to the connecting line n. The voltage V_{C} between the two terminals of the smoothing capacitor 26 is applied to the voltage divider circuit having the resistors R3 and R4. The node of the resistors R3 and R4 where the output of the voltage divider circuit is produced is connected to the other input terminal of a comparator circuit 40.

The output terminal of the comparator circuit 40 is connected to the input terminal of a control circuit 42. Control signals from the control circuit 42 are supplied to drive circuits 34 and 36 which are responsible for driving the respective FETs 18 and 20.

In a power supply circuit having a configuration as described above, the voltage ratio of the voltage divider circuit comprising the resistors R1 and R2 and that of the voltage divider circuit comprising the resistors R3 and R4 are respectively set to predetermined values. Then, the output of the comparator circuit 40 will be inverted whenever the instantaneous input voltage V_{B} exceeds the voltage V_{C} between the two terminals of the smoothing capacitor 26 for some reason or other, which may be a surge that appears on the power supply line. Under this situation, the comparison output of the comparator circuit 40 is sent to the control circuit 42.

Upon receiving a comparison output. the control circuit 42 transmits control signals to the drive circuits 34 and 36 to stop the operation of the FETs 18 and 19. Consequently, the drive circuits 34 and 36 do not transmit any more pulse signals to the gates of the respective FETs 18 and 20 to drive the latter, which then terminate their respective switching operations. In this way, the FETs 18 and 20 are protected against exposure to excessively large electric current.

## Claims

1. A power supply device comprising
a full-wave rectifying circuit (4) for rectifying the AC supplied from an AC power source (2) to produce source input DC,
first and second capacitors (14, 16) connected in series between the two rectified current output terminals of said full-wave rectifying circuit (4),
a first series circuit having one of two terminals connected to the positive side rectified current output terminal of said full-wave rectifying circuit (4) and comprising a first diode (8) having a forward polarity relative to the direction of the output current of said full-wave rectifying circuit (4),
a second series circuit having one of its two terminal connected to the negative side rectified current output terminal of said full-wave rectifying circuit (4),
a smoothing capacitor (26) connected between the other terminal of said first series circuit and the other terminal of said second series circuit,
first and second reverse-conducting switch devices (18, 20, 22, 24) arranged in series with each other and both being connected in parallel with said smoothing capacitor (26), the node between said first and second reverse-conducting switch devices (18, 20, 22, 24) being connected with the node between said first and second capacitors (14, 16),
said first series circuit further comprising a first inductor (6), and
said second series circuit further comprising a second inductor (10), characterized in that
said power supply device further comprises voltage comparing means (40, C1, D1, R1 - R4) for comparing the input voltage from said full-wave rectifying circuit (4) and the voltage between the two terminals of said smoothing capacitor (26) and control means (42) for stopping the switching operation of said reverse-conducting switch devices (18, 20, 22, 24) on the basis of the output of said voltage comparing means (40, C1, D1, R2 - R4) whenever the input voltage from said full-wave rectifying circuit (4) is undesirably raised.

2. A device according to claim 1, characterized in that said voltage comparing means (40, C1, D1, R1-R4) is connected in series with a first voltage divider circuit (R1, R2) connected between the two terminals of said first capacitor (14) and between the two terminals of said first reverse-conducting switch device (18, 22) and comprises a third diode (D1) having an anode connected to the other terminal of said first series circuit (6, 8), a third capacitor (C1), a second voltage divider circuit (R3, R4) connected between the two terminals of said third capacitor (C1) and a comparator (40) for comparing the output of said first voltage divider (R1, R2) circuit with that of said second voltage divider circuit (R3, R4).

## Patentansprüche

1. Leistungsversorgungsvorrichtung mit
einer Vollwellengleichrichterschaltung (4) zum Gleichrichten des von einer Wechselstromquelle (2) eingespeisten Gleichstromes, um einen Quelleneingangsgleichstrom zu erzeugen,
ersten und zweiten Kondensatoren (14, 16), die in Reihe zwischen den zwei gleichgerichteten Stromausgangsanschlüssen der Vollwellengleichrichterschaltung (4) verbunden sind,
einer ersten Reihenschaltung, bei der einer der beiden Anschlüsse an den positivseitigen gleichgerichteten Stromausgangsanschluß der Vollwellengleichrichterschaltung (4) angeschlossen ist und die eine erste Diode (8) mit einer Vorwärtspolarität bezüglich der Richtung des Ausgangsstromes der Vollwellengleichrichterschaltung (4) aufweist,
einer zweiten Reihenschaltung, bei der einer der beiden Anschlüsse mit dem negativseitigen, gleichgerichteten Stromausgangsanschluß der Vollwellengleichrichterschaltung (4) verbunden ist,
einem Glättungskondensator (26), der zwischen dem anderen Anschluß der ersten Reihenschaltung und dem anderen Anschluß der zweiten Reihenschaltung verbunden ist,
ersten und zweiten, rückwärtsleitenden Schaltvorrichtungen (18, 20, 22, 24), die in Reihe miteinander angeordnet und beide parallel zu dem Glättungskondensator (26) verbunden sind, wobei der Knoten zwischen den ersten und zweiten rückwärts-leitenden Schaltvorrichtungen (18, 20, 22, 24) mit dem Knoten zwischen den ersten und zweiten Kondensatoren (14, 16) verbunden ist,
wobei die erste Reihenschaltung außerdem eine erste Induktivität (6) aufweist, und
wobei die zweite Reihenschaltung außerdem eine zweite Induktivität (10) aufweist,
dadurch gekennzeichnet, daß
die Leistungs- bzw. Stromversorgungsvorrichtung außerdem eine Spannungsvergleichereinrichtung (40, C1, D1, R1 - R4) zum Vergleichen der Eingangsspannung von der Vollwellengleichrichterschaltung (4) und der Spannung zwischen den beiden Anschlüssen des Glättungskondensators (26) und eine Steuereinrichtung (42) zum Stoppen des Schaltbetriebes der rückwärtsleitenden Schaltvorrichtungen (18, 20, 22, 24) auf der Grundlage des Ausgangssignales der Spannungsvergleichereinrichtung (40, C1, D1, R2 - R4) wann immer die Eingangsspannung von der Vollwellengleichrichterschaltung (4) in unerwünschter Weise angehoben ist, aufweist.

2. Vorrichtung nach Anspruch 1, dadurch gekennzeichnet, daß die Spannungsvergleichereinrichtung (40, C1, D1, R1 - R4) in Reihe mit der ersten Spannungsteilerschaltung (R1, R2), die zwischen den beiden Anschlüssen des ersten Kondensators (14) verbunden ist, und zwischen den beiden Anschlüssen der ersten rückwärtsleitenden Schaltvorrichtung (18, 22) verbunden ist und eine dritte Diode (D1), deren Anode mit dem anderen Anschluß der ersten Reihenschaltung (6, 8) verbunden ist, einen dritten Kondensator (C1), eine zweite Spannungsteilerschaltung (R3, R4), die zwischen den beiden Anschlüssen des dritten Kondensators (C1) verbunden ist, und einen Vergleicher (40) zum Vergleichen des Ausgangssignales der ersten Spannungsteilerschaltung (R1, R2) mit derjenigen der zweiten Spannungsteilerschaltung (R3, R4) aufweist.

## Revendications

1. Un dispositif d'alimentation en courant comportant
un circuit redresseur pleine onde (4) pour rectifier l'alimentation alternative provenant d'une source d'alimentation (2) en courant alternatif pour produire une entrée de source en courant continu,
un premier et un second condensateurs (14,16) reliés en série entre les deux bornes de sortie du courant redressé dudit circuit redresseur pleine onde (4).
un premier circuit série dont l'une des deux bornes est reliée à la borne de sortie du courant redressé du côté positif dudit circuit redresseur pleine onde (4) et comportant une première diode (8) présentant une polarité dans le sens passant par rapport à la direction du courant de sortie dudit circuit redresseur pleine onde (4),
un second circuit série dont l'une des deux bornes est reliée à la borne de sortie du courant redressé du côté négatif dudit circuit redresseur pleine onde (4),
un condensateur de lissage (26) monté entre l'autre borne dudit premier circuit série et l'autre borne dudit second circuit série,
un premier et un second dispositifs de commutation à conduction inverse (18,20,22,24) disposés en série l'un par rapport à l'autre et étant tous deux montés en parallèle avec ledit condensateur de lissage (26), le noeud entre lesdits premier et second dispositifs de commutation à conduction inverse (18,20,22,24) étant relié au noeud entre lesdits premier et second condensateurs (14,16),
ledit premier circuit série comportant au surplus une première self (6) et
ledit second circuit série comportant au surplus une seconde self (10), caractérisé en ce que
ledit dispositif d'alimentation en courant comporte au surplus des moyens (40, C1, D1, R1 - R4) de comparaison de tensions pour comparer la tension d'entrée provenant dudit circuit redresseur pleine onde (4) et la tension entre les deux bornes dudit condensateur de lissage (26), et des moyens de commande (42) pour arrêter l'opération de commutation desdits dispositifs de commutation à conduction inverse (18,20,22,24) sur la base de la sortie desdits moyens de comparaison de tensions (40, C1, D1, D2, R2 - R4) chaque fois que la tension d'entrée provenant dudit circuit redresseur pleine onde (4) a augmenté de manière indésirable.

2. Un dispositif selon la revendication 1, caractérisé en ce que lesdits moyens (40, C1, D1, R1 - R4) de comparaison de tensions sont montés en série avec un premier circuit diviseur de tension (R1, R2) monté entre les deux bornes dudit premier condensateur (14) et entre les deux bornes dudit premier dispositif de commutation à conduction inverse (18,22), et comporte une troisième diode (D1) présentant une anode reliée à l'autre borne dudit premier circuit série (6,8), un troisième condensateur (C1), un second circuit diviseur de tension (R3, R4) monté entre les deux bornes dudit troisième condensateur (C1), et un comparateur (40) pour comparer la sortie dudit premier circuit diviseur de tension (R1,R2) avec celle dudit second circuit diviseur de tension (R3,R4).
